**Europäisches Patentamt**

**European Patent Office**

**Office européen des brevets**

(19)

(11) Veröffentlichungsnummer : **0 175 061**
**B1**

# (12) EUROPÄISCHE PATENTSCHRIFT

(45) Veröffentlichungstag der Patentschrift :
17.08.88

(51) Int. Cl.⁴ : **B 60 K 20/02**

(21) Anmeldenummer : 85107035.9

(22) Anmeldetag : 07.06.85

(54) **Geber für ein Schaltgetriebe eines Kraftfahrzeuges.**

(30) Priorität : 18.09.84 DE 3434205

(43) Veröffentlichungstag der Anmeldung :
26.03.86 Patentblatt 86/13

(45) Bekanntmachung des Hinweises auf die Patenterteilung : 17.08.88 Patentblatt 88/33

(84) Benannte Vertragsstaaten :
DE FR GB IT SE

(56) Entgegenhaltungen :
DE-A- 1 630 253
DE-A- 3 138 827
DE-A- 3 237 508
DE-B- 2 460 769
US-A- 3 974 711
US-A- 4 022 078

(73) Patentinhaber : WABCO Westinghouse Fahrzeugbremsen GmbH
Am Lindener Hafen 21 Postfach 91 12 80
D-3000 Hannover 91 (DE)

(72) Erfinder : Bortfeld, Harald
Callinstrasse 4
D-3000 Hannover 1 (DE)
Erfinder : Danne, Lutz
Kapellenfeld 4
D-3003 Ronnenberg 4 (DE)
Erfinder : Lehrmann, Joachim
Sandweg 2
D-3160 Lehrte (DE)
Erfinder : Klatt, Alfred
Dannhorstweg 25
D-3101 Wathlingen (DE)

(74) Vertreter : Schrödter, Manfred
WABCO Westinghouse Fahrzeugbremsen GmbH Am
Lindener Hafen 21 Postfach 91 12 80
D-3000 Hannover 91 (DE)

## Beschreibung

Die Erfindung bezieht sich auf einen Geber für ein Schaltgetriebe eines Kraftfahrzeuges gemäß dem Oberbegriff des Patentanspruchs 1.

Ein derartiger Geber ist aus der DE-A 32 37 508 bekannt. Dieser weist im Gegensatz zur sonst üblichen H-Schaltung nur vier Positionen auf, nämlich Grundstellung, Neutralstellung, Hochschalten und Runterschalten. In den Positionen Hochschalten und Runterschalten wählt eine Elektronik selbständig den am besten passenden nächst höheren bzw. nächst niedrigeren Gang aus und bewirkt dessen Einlegung im Getriebe. In der Neutralstellung wird im Getriebe der Leerlauf eingelegt. In die Grundstellung bewegt sich der Schalthebel durch Federkraft nach einer Anwahl der Positionen Hochschalten oder Runterschalten zurück.

Damit die Elektronik die jeweilige Stellung des Gebers bzw. des Schalthebels erkennen kann, ist eine Abtast-Einrichtung notwendig, die vorzugsweise berührungslos arbeitende Sensoren aufweist. Eine solche Abtast-Einrichtung, allerdings für eine H-Schaltung, ist aus der DE-A-31 38 827 bekannt. Diese Einrichtung ist aber relativ kompliziert aufgebaut. Zur Abtastung sind magnetfeldempfindliche Sensoren vorgesehen, die nach einem vorgegebenen Code abgefühlt werden.

Es besteht weiterhin der Wunsch, noch andere Signale vom Schalthebel her berührungslos zu übertragen. So besitzen Nutzfahrzeug-Getriebe oft eine nachgeschaltete Split-Gruppe, die zur Verdoppelung der Zahl der Gänge dient. Das Einlegen dieser SplitGruppe wird vom Fahrer durch einen am Schalthebel angebrachten Schalter ausgelöst.

Durch einen weiteren Schalter kann der Fahrer der Schalt-Elektronik mitteilen, daß beim Schalten ein oder mehrere Gänge übersprungen werden sollen. Dies dient zur Kraftstoff-Einsparung bei leerem oder nur teilweise beladenem Fahrzeug. Ferner kann auch ein automatisches Gangwahlprogramm wirksam werden.

Die berührungslose Übertragung der obengenannten Signale soll möglichst zuverlässig erfolgen. Falls zur Abtastung, wie oben erwähnt, ein Code benutzt wird, sollten möglichst keine Sprünge des Codes zwischen benachbarten Schaltstellungen auftreten.

Der Erfindung liegt die Aufgabe zugrunde, einen Geber der eingangs genannten Art so auszubilden, daß eine konstruktiv einfache, zuverlässige Abtastung der Stellungen des Schalthebels sowie weiterer Signale gewährleistet ist.

Diese Aufgabe wird durch die im Patentanspruch 1 enthaltene Erfindung gelöst. Die Unteransprüche enthalten zweckmäßige Weiterbildungen der Erfindung.

Der erfindungsgemäße Geber weist im Gegensatz zur bekannten Anordung keine Codierung der Schaltstellung auf, sondern hat für jede Position einen eigenen Sensor. Dies erhöht zwar den Aufwand an Sensoren, ergibt jedoch den Vorteil einer verbesserten Zuverlässigkeit. Es ist jede Stellung verboten, in der mehr als ein Sensor betätigt ist. Hierdurch kann ein fehlerhaftes Schalten erkannt werden.

Die Erfindung wird im folgenden anhand einer Zeichnung näher erläutert. Es zeigen die

Fig. 1 ein Schnittbild (Seitenansicht des Gebers)

Fig. 2 eine Draufsicht auf die Schaltplatine mit den Sensoren und den Betätigungs-Magneten.

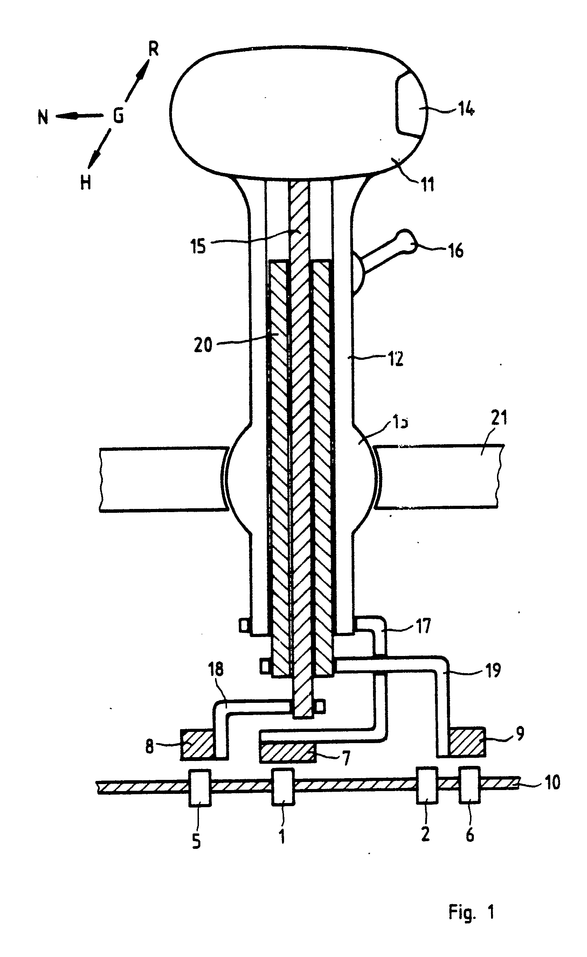

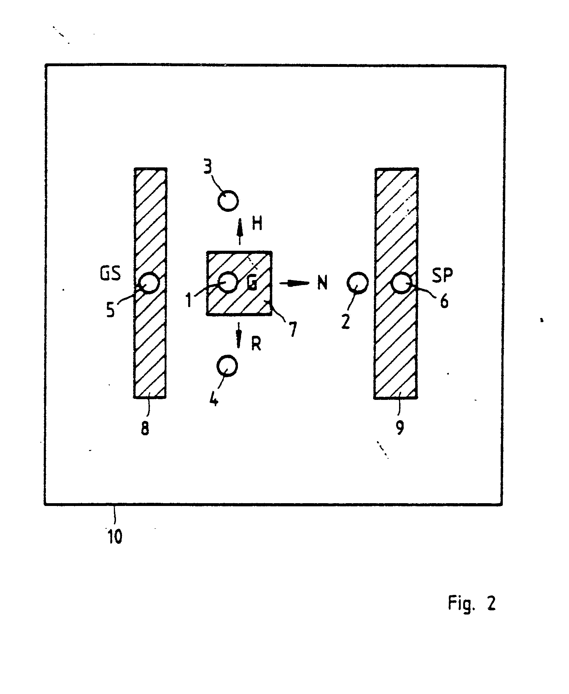

In Fig. 1 ist der Schalthebel 12 des Gebers und die darunter befindliche Abtasteinrichtung im Schnitt schematisch dargestellt. Der Schalthebel 12 ist mit einem Kugelgelenk 13 im Gebergehäuse 21 beweglich gelagert. Der Schalthebel 12 ist in der (gezeichneten) Grundposition G durch eine nicht dargestellte Feder zentriert. Zum Hochschalten wird der Schalthebel kurz in die Richtung des Pfeiles H, und zum Runterschalten in die Richtung des Pfeiles R bewegt. Zum Einlegen der Neutralstellung wird der Schalthebel 12 kurzzeitig in Richtung des Pfeiles N bewegt. (Vergleiche Fig. 2).

Zur Sensierung der drei Positionen H, R und N ist am unteren Ende des Schalthebels 12 an einer Blechfahne 17 ein Magnet 7 befestigt. Dieser steht in der (gezeichneten) Grundstellung über dem Sensor 1. In der Neutralstellung befindet sich der Magnet 7 über dem Sensor 2. In der Hochschaltstellung befindet sich der Magnet 7 über dem Sensor 3, und in der Runterschaltstellung über dem Sensor 4 (vergleiche Fig. 2). Die Sensoren 5 und 6 werden weiter unten erläutert.

Der untere Teil des Schalthebels 1 ist gegenüber der Realität verkürzt gezeichnet, so daß sich bei dem erfindungsgemäß gebauten Geber die kurvenförmige Bewegung der Betätigungsmagnete nicht negativ bemerkbar macht.

Die Sensoren 1 bis 6 sind auf einer gemeinsamen Platine 10 angeordnet. Als Sensoren sind vorzugsweise Halleffektschalter vorgesehen.

Am Knauf 11 des Schalthebels 12 ist ein Schalter 14 angeordnet, der zum Auslösen eines Gang-Überspringens dient. Durch die Betätigung des Schalters 14 wird über eine (nicht dargestellte) Umlenkung eine zentrale Stange 15 nach unten verschoben. Am unteren Ende der Stange 15 ist über eine Blechfahne 18 ein stabförmiger Magnet 8 befestigt. Dieser schaltet bei entsprechender Betätigung den Sensor 5 für den Gangsprung ein. Eine solche Einschaltung ist nur in der gezeichneten Grundstellung und in der Hochschalt- und Runterschalt-Stellung möglich (vergleiche Fig. 2). In diesen Stellungen wird der Sensor 5 vom stabförmigen Magneten 8 überdeckt. In der Neutralstellung ist dagegen die Betätigung des Gangsprung-Sensors 5 nicht möglich, weil der Sensor 5 dann nicht mehr überdeckt wird.

Am Schalthebel 12 ist weiterhin ein Split-Schalter 16 angebaut, durch welchen ein koaxial angeordnetes Röhrchen 20 bei Betätigung nach unten verschoben werden kann. (Einzelheiten des Betätigungsmechanismus sind nicht dargestellt). Am unteren Ende des Röhrchens 20 ist über eine Blechfahne 19 ein Betätigungsmagnet 9 befestigt. Durch diesen läßt sich ein Sensor 6 zum Einlegen der Split-Gruppe im Getriebe schalten. Die Betätigung ist, wie beim oben beschriebenen Sensor 5, in der Neutral-Position nicht möglich.

Die Stange 15 und das Röhrchen 20 können auch als Flachmaterial und im unteren Bereich für eine direkte Befestigung der Magnete abgewickelt ausgeführt sein (nicht dargestellt).

Die bereits erwähnte Fig. 2 zeigt eine Draufsicht auf die Schaltplatine 10 mit den eingebauten Sensoren 1 bis 6 sowie den darüber bzw. benachbart angeordneten Betätigungsmagneten 7 bis 9. Um eine unerwünschte wechselseitige Betätigung der Sensoren 1 bis 4 durch die Magnete 8 und 9 auszuschließen, sind die Sensoren 1 bis 4 sowie der zugehörige Betätigungsmagnet 7 umgekehrt gepolt wie die Sensoren 5 und 6 mit den dazugehörigen Betätigungsmagneten 8 und 9. Es werden also vorzugsweise solchen Sensoren verwendet, die je nach Polarität des Betätigungsmagneten unterschiedlich reagieren. Als Sensoren sind Hall-Generatoren oder magnetfeldempfindliche Widerstände vorgesehen.

Der Magnet 7 und der Magnet 9 sind in der (gezeichneten) Grundstellung G unsymmetrisch über dem jeweiligen zugehörigen Sensor positioniert. Hierdurch schaltet bei einer Schwenkung in die Neutralstellung N bei betätigtem Splitmagnet 9 zuerst der Sensor 1 und danach der Sensor 6 ab. Durch eine entsprechend ausgebildete Auswerte-Elektronik wird hierdurch sichergestellt, daß eine eingelegte Split-Gruppe auch in der Neutralstellung im Getriebe eingelegt bleibt. Die Elektronik ist im übrigen so ausgebildet, daß eine alte Position des Schalthebels solange erhalten bleibt, bis zuverlässig eine neue Position erkannt worden ist.

**Patentansprüche**

1. Geber für ein Schaltgetriebe eines Kraftfahrzeuges, mit einem Schalthebel (12), der mindestens die Schaltstellungen Grundstellung (G), Neutralstellung (N), Hochschalten (H) und Runterschalten (R) einnehmen kann, und wobei die Abtastung der Schaltstellungen (G, N, H, R) berührungslos mittels Sensoren (1 bis 6) erfolgt, gekennzeichnet durch folgende Merkmale :

a) es sind gepolte Sensoren (1 bis 6) vorgesehen ;

b) es ist je ein erster Sensor (1 bis 4) für die Grundstellung (G), die Neutralstellung (N), die Hochschalt-Stellung (H) und die Runterschalt-Stellung (R) vorgesehen ;

c) die ersten Sensoren (1 bis 4) sind durch einen benachbart liegenden, schwenkbaren ersten Magneten (7) schaltbar ;

d) es sind zwei weitere Magnete (8, 9) vorgesehen zur Schaltung je eines weiteren Sensors (5, 6) für Gangsprung (GS) und Split (SP) in den Stellungen Grundstellung (G), Hochschalt-Stellung (H) und Runterschalt-Stellung (R) ;

e) die weiteren Magnete (8, 9) und Sensoren (5, 6) sind gegenüber dem ersten Magneten (7) und den ersten Sensoren (1 bis 4) umgekehrt gepolt ;

f) die weiteren Magnete (8, 9) sind mit dem ersten Magneten (7) gemeinsam schwenkbar angeordnet ;

g) die weiteren Magnete (8, 9) sind zum Schalten von Gangsprung (GS) und Split (SP) einzeln in Richtung auf die Sensoren (1 bis 6) vertikal verschiebbar.

2. Geber nach Anspruch 1, dadurch gekennzeichnet, daß die Sensoren (1 bis 6) auf einer gemeinsamen Platine (10) angeordnet sind.

3. Geber nach Anspruch 1 bis 2, dadurch gekennzeichnet, daß der Schalthebel (12) mit einem Kugelgelenk (13) im Gehäuse (21) des Gebers gelagert ist.

4. Geber nach Anspruch 1 bis 3, dadurch gekennzeichnet, dan der Schalthebel (12) einen Knauf (11) mit einem Gangsprung-Schalter (14) aufweist, wobei durch den Schalter (14) eine Stange (15) mit dem weiteren Magneten (8) vertikal verschiebbar ist.

5. Geber nach Anspruch 1 bis 4, dadurch gekennzeichnet, daß der Schalthebel (12) einen Split-Schalter (16) aufweist, durch welchen ein Röhrchen (20) mit dem weiteren Magneten (9) vertikal verschiebbar ist.

6. Geber nach Anspruch 1 bis 5, dadurch gekennzeichnet, daß am unteren Ende des Schalthebels (12) der erste Magnet (7) vertikal unverschiebbar befestigt ist.

7. Geber nach Anspruch 1 bis 6, dadurch gekennzeichnet, daß die Magnete (7,8,9) mittels Blechfahnen (17,18,19) am Schalthebel (12), an der Stange (15), oder an dem Röhrchen (20) befestigt sind.

8. Geber nach Anspruch 4 bis 7, dadurch gekennzeichnet, daß die Stange (15), das Röhrchen (20) und der Schalthebel (12) koaxial angeordnet sind.

9. Geber nach Anspruch 1 bis 3, dadurch gekennzeichnet, daß der Schalthebel (12) einen Gangsprung-Schalter (14) sowie einen Split-Schalter (16) aufweist, durch welche die weiteren Magnete (8, 9) mittels durch den Schalthebel (12) hindurchgeführter Flachmaterialstangen vertikal verschiebbar sind.

**Claims**

1. Transmitter for a gear mechanism of a motor vehicle, having a gear shift lever (12), which can assume at least centre (G), neutral (N), change-up (H) and change-down (R) positions, and wherein the sensing of the positions (G, N, H, R) is effected in a non-contact-making manner by means of sensors, characterized by the following features :

a) poled sensors (1 to 6) are provided ;

b) a first sensor (1 to 4) is provided for each of the centre position (G), the neutral position (N), the change-up position (H) and the change-down position (R) ;

c) the first sensors (1 to 4) can be switched by an adjacent, pivotable first magnet (7) ;

d) two further magnets (8, 9) are provided for switching a further sensor (5, 6) each for gear jump (GS) and gear split-ratio (SP) in the normal (G), change-up (H) and change-down (R) positions ;

e) the further magnets (8, 9) and sensors (5, 6) are of reversed polarity to the first magnet (7) and the first sensors (1 to 4) ;

f) the further magnets (8, 9) are arranged to be pivotable jointly with the first magnet (7) ;

g) the further magnets (8, 9) are vertically displaceable towards the sensors (1 to 6) for controlling gear jump (GS) and gear split-ratio (SP).

2. Transmitter according to claim 1, characterised in that the sensors (1 to 6) are arranged on a common panel (10).

3. Transmitter according to claims 1 to 2, characterized in that the gear shift lever (12) is mounted by a ball joint (13) in the housing (21) of the transmitter.

4. Transmitter according to claims 1 to 3, characterized in that the gear shift lever (12) has a knob (11) with a gear jump control (14), wherein by means of the control (14) a rod (15) with the further magnet (8) is vertically displaceable.

5. Transmitter according to claims 1 to 4, characterized in that the gear shift lever (12) has a split-ratio control (16) by means of which a tube (20) with the further magnet (9) is vertically displaceable.

6. Transmitter according to claims 1 to 5, characterized in that the first magnet (7) is secured to the lower end of the gear shift lever (12) such that it is vertically immovable.

7. Transmitter according to claims 1 to 6, characterized in that the magnets (7, 8, 9) are secured by means of sheet metal arms (17, 18, 19) to the gear shift lever (12), to the rod (15) or to the tube (20).

8. Transmitter according to claims 4 to 7, characterized in that the rod (15), the tube (20) and the gear shift lever (12) are coaxially arranged.

9. Transmitter according to claims 1 to 3, characterized in that the gear shift lever (12) has a gear jump control (14) and a split-ratio control (16), by which the further magnets (8, 9) are vertically displaceable by means of flat material bars led through the gear shift lever (12).

**Revendications**

1. Transmetteur pour boîte de vitesses de véhicule automobile, comprenant un levier de vitesses (12) qui peut prendre au moins les positions de commande suivantes : position de base (G), position de point mort (N), position de montée des rapports (H) et position de rétrogradage (R), et dans lequel la détection des positions de commande (G, N, H et R) s'effectue sans contact matériel, au moyen de détecteurs (1 à 6), caractérisé par les traits caractéristiques suivants :

a) il est prévu des détecteurs polarisés (1 à 6) ;

b) il est prévu un premier détecteur (1 à 4) pour chacune des positions suivantes : la position de base (G), la position de point mort (N), la position de montée des rapports (H) et la position de rétrogradage (R) ;

c) les premiers détecteurs (1 à 4) peuvent être activés par un premier aimant (7) mobile en mouvement oscillant, situé dans une position adjacente ;

d) il est prévu deux aimants additionnels (8, 9) qui peuvent activer respectivement deux détecteurs additionnels (5, 6) prévus l'un pour le saut de rapport (GS) et l'autre pour le réducteur (SP), dans les positions constituées par la position de base (G), la position de montée des rapports (H) et la position de rétrogradage (R) ;

e) les aimants additionnels (8, 9) et les détecteurs additionnels (5, 6) sont d'une polarité inverse de celle du premier aimant (7) et des premiers détecteurs (1 à 4) ;

f) les aimants additionnels (8, 9) sont montés de façon à pouvoir être déplacés en mouvement oscillant conjointement avec le premier aimant (7) ;

g) les aimants additionnels (8, 9) peuvent être déplacés séparément en translation verticale vers les détecteurs (1 à 6) pour la commande du saut de rapport (GS) et du réducteur (SP).

2. Transmetteur selon la revendication 1, caractérisé en ce que les détecteurs (1 à 6) sont montés sur une platine commune (10).

3. Transmetteur selon la revendication 1 ou 2, caractérisé en ce que le levier de vitesses (12) est monté dans le boîtier (21) du transmetteur au moyen d'une articulation à rotule (13).

4. Transmetteur selon les revendications 1 3, caractérisé en ce que le levier de vitesses (12) comprend un pommeau (11), qui porte une commande (14) pour le saut de rapport, cette commande (14) permettant de déplacer verticalement une tige (15) qui porte l'aimant additionnel (8).

5. Transmetteur selon les revendications 1 à 4, caractérisé en ce que le levier de vitesses (12) porte une commande de réducteur (16) permettant de déplacer verticalement un tube (20) qui porte l'aimant additionnel (9).

6. Transmetteur selon les revendications 1 à 5, caractérisé en ce que le premier aimant (7) est fixé à l'extrémité inférieure du levier de vitesses (12) dans une position immobile dans la direction verticale.

7. Transmetteur selon les revendications 1 à 6, caractérisé en ce que les aimants (7, 8, 9) sont fixés au levier de vitesses (12), à la tige (15) ou au tube (20) au moyen de pattes en tôle (17, 18, 19).

8. Transmetteur selon les revendications 4 à 7, caractérisé en ce que la tige (15), le tube (20) et le levier de vitesses (12) sont disposés coaxialement.

9. Transmetteur selon les revendications 1 3, caractérisé en ce que le levier de vitesses (12) porte une commande de saut de rapport (14) ainsi qu'une commande de réducteur (16), sous l'action desquelles les aimants additionnels (8, 9) peuvent être déplacés en translation verticale au moyen de barres de matière plate qui passent dans le levier de vitesses (12).

Fig. 1

Fig. 2